(19) Europäisches Patentamt
European Patent Office
Office européen des brevets

(11) **EP 3 993 531 B1**

(12) **EUROPEAN PATENT SPECIFICATION**

(45) Date of publication and mention
of the grant of the patent:
**13.08.2025 Bulletin 2025/33**

(21) Application number: **19935154.5**

(22) Date of filing: **27.06.2019**

(51) International Patent Classification (IPC):
*H04W 72/04* (2023.01)    *H04W 48/08* (2009.01)
*H04W 48/18* (2009.01)    *H04L 5/00* (2006.01)
*H04L 1/00* (2006.01)

(52) Cooperative Patent Classification (CPC):
**H04L 1/1671; H04L 1/1861; H04L 5/0032;**
**H04L 5/0053; H04L 5/0092; H04L 27/2601;**
H04L 5/001; H04L 5/0023; H04L 5/0048;
H04W 48/16; H04W 72/0453

(86) International application number:
**PCT/JP2019/025674**

(87) International publication number:
**WO 2020/261498 (30.12.2020 Gazette 2020/53)**

(54) **TERMINAL AND WIRELESS COMMUNICATION METHOD**

ENDGERÄT UND DRAHTLOSKOMMUNIKATIONSVERFAHREN

TERMINAL ET PROCÉDÉ DE COMMUNICATION SANS FIL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**04.05.2022 Bulletin 2022/18**

(73) Proprietor: **NTT DOCOMO, INC.**
**Chiyoda-Ku**
**Tokyo 100-6150 (JP)**

(72) Inventors:
• **YOSHIOKA, Shohei**
**Tokyo 100-6150 (JP)**
• **HARADA, Hiroki**
**Tokyo 100-6150 (JP)**
• **NAGATA, Satoshi**
**Tokyo 100-6150 (JP)**
• **WANG, Lihui**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(56) References cited:
WO-A1-2015/174438    WO-A1-2017/205133
JP-A- 2012 100 110    JP-A- 2016 539 557
US-A1- 2012 230 268

## Description

Technical Field

The present disclosure relates to a terminal and a radio communication method in next-generation mobile communication systems.

Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

WO 2017/205133 A1 discloses methods and apparatus for uplink control information (UCI) reporting. In certain aspects, a method includes receiving an indication of a number of symbols of a subframe available for uplink transmission. In certain aspects, the method further includes rate matching uplink control information (UCI) to the subframe based on the indication.

US 201 2/230268 A1 discloses method and apparatus for sending uplink control information (UCI) by a multi-mode wireless transmit/receive unit (WTRU) capable of operating on multiple component carriers of a plurality of radio access technologies (RATs) for multi-RAT operation. The multi-mode WTRU may generate UCI pertaining to a first RAT and send at least part of the UCI via a feedback channel on a component carrier of a second RAT. The first RAT may be Long Term Evolution (LTE) and the second RAT maybe High Speed Packet Access (HSPA), or vice versa. The UCI of the RATs may be multi-plexed onto a carrier of any one of the RATs. The UCI bits for a pair of, or multiple, serving cells may be jointly encoded.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

Summary of Invention

Technical Problem

In a radio communication system (for example, NR after Rel. 16), it is considered to use a frequency range (FR) (also referred to as a frequency band, a band, or the like) higher than a specific frequency (for example, 52.6 GHz).

In a frequency range higher than the specific frequency, it is assumed that a phase noise becomes large and high sensitivity is provided for a peak-to-average power patio (PAPR).

However, how to perform communication control (for example, channel design, modulation control, mapping control, or the like) in a frequency range higher than the specific frequency has not been sufficiently studied.

Therefore, an object of the present disclosure is to provide a terminal and a radio communication method capable of appropriately performing communication even when a frequency range higher than a specific frequency is used.

Solution to Problem

The invention is set out in the appended set of claims.

Advantageous Effects of Invention

According to one aspect of the present disclosure, communication can be appropriately performed even when a frequency range higher than a specific frequency is used.

Brief Description of Drawings

Fig. 1 is a diagram illustrating an example of an FR.
Fig. 2 is a diagram illustrating an example of a symbol length in each SCS.
Figs. 3A and 3B are diagrams illustrating an example of a modulation scheme according to a first aspect.
Fig. 4 is a diagram illustrating an example of an MCS index table.
Fig. 5 is a diagram illustrating an example of an MCS index table.
Fig. 6 is a diagram illustrating an example of an MCS index table.
Fig. 7 is a diagram illustrating an example of UCI transmission corresponding to a downlink signal received by an FR4 cell according to a second aspect.
Figs. 8A and 8B are diagrams illustrating an example of UCI transmission corresponding to a downlink/uplink signal transmitted and received by an FR4 cell according to the second aspect.
Fig. 9 is a diagram illustrating an example of UCI transmission corresponding to a downlink/uplink signal transmitted and received by an FR4 cell according to the second aspect.

Fig. 10 is a diagram illustrating an example of dynamic switching of a cell for UCI transmission according to the second aspect.

Figs. 11A and 11B are diagrams illustrating an example of an operation mode of an FR4 cell according to a third aspect.

Figs. 12A and 12B are diagrams illustrating an example of cross-carrier scheduling according to a fourth aspect.

Figs. 13A to 13C are diagrams illustrating an example of a configuration of an FR4 according to a fifth aspect.

Fig. 14 is a diagram illustrating an example of a schematic configuration of a radio communication system according to one embodiment.

Fig. 15 is a diagram illustrating an example of a configuration of a base station according to one embodiment.

Fig. 16 is a diagram illustrating an example of a configuration of a user terminal according to one embodiment.

Fig. 17 is a diagram illustrating an example of a hardware configuration of a base station and a user terminal according to one embodiment.

Description of Embodiments

(FR)

In Rel. 15 NR, it has been studied to use a frequency band up to a specific frequency (for example, 52.6 GHz). In NR after Rel. 16, it is considered to use a frequency band above 52.6 GHz. Note that the frequency band may be referred to as a frequency range (FR), a band, or the like.

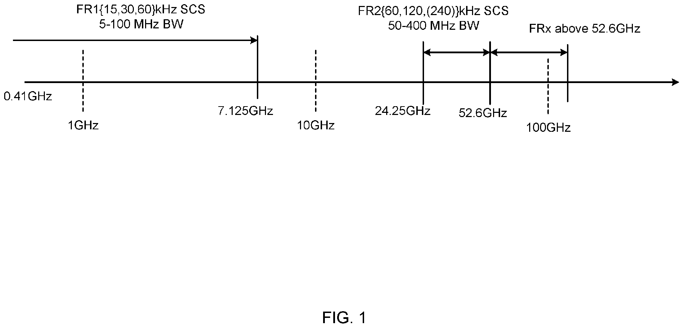

Fig. 1 is a diagram illustrating an example of an FR. As illustrated in Fig. 1, in NR, support of a plurality of frequency ranges (FR) has been studied.

For example, as illustrated in Fig. 1, as the frequency range in NR, for example, at least one of 410 MHz to 7.125 GHz as the first FR (FR1), 24.25 GHz to 52.6 GHz as the second FR (FR2), 7.125 GHz to 24.25 GHz as the third FR (FR3), and 52.6 GHz to 114.25 GHz as the fourth FR (FR4) may be supported. UE may support at least one of the plurality of FRs.

Note that the names of the first to fourth FRs are not limited to FR1 to FR4. Hereinafter, the FR, which is a target of 52.6 GHz to 114.25 GHz is referred to as the FR4, but may be referred to as an FRx (x is an arbitrary character string) or the like. In addition, the frequency ranges of the first to fourth FRs are merely an example, and may be any frequency range as long as they have a certain bandwidth. For example, the upper limit of the FR4 is not limited to 114.25 GHz.

In the FR4, it is assumed that a phase noise increases and a propagation loss increases. In addition, it is assumed that at least one of a peak-to-average power patio (PAPR) and a PA having non-linearity has high sensitivity.

At least one of a large (wide) subcarrier spacing (SCS) (that is, a small number of FFT points), a single carrier waveform, a mechanism of reduced PAPR in a large SCS, and a narrow beam (that is, a large number of beams) is required.

In consideration of the above-described matters, in the FR4, it is also considered to support a wider (larger) SCS than the SCS (for example, 15 kHz, 30 kHz, 60 kHz, 120 kHZ, 240 kHz) supported in NR Rel. 15.

In addition, in the FR4, it is also studied to use cyclic prefix (CP)-orthogonal frequency division multiplexing (OFDM) (multi-carrier) or discrete Fourier transform (DFT) spread OFDM (single carrier) in the SCS wider than that of NR Rel. 15 as a waveform.

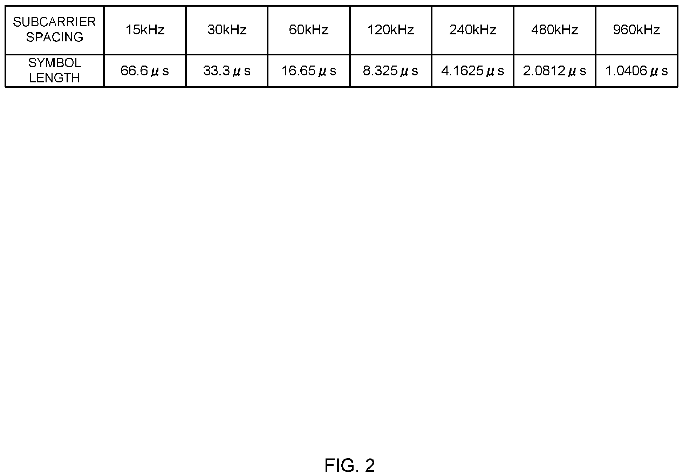

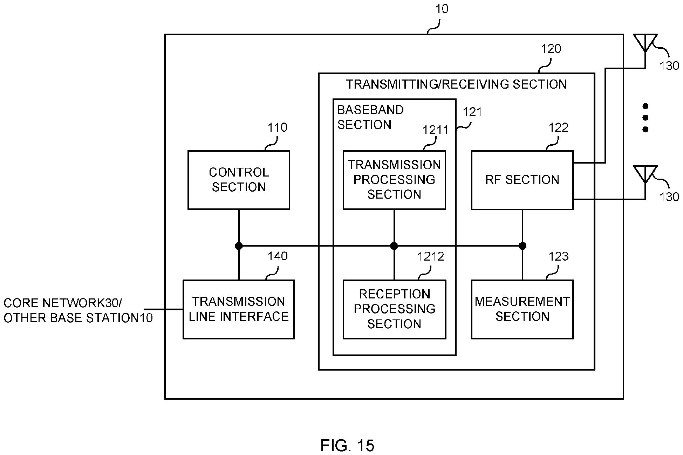

Fig. 2 is a diagram illustrating an example of a symbol length in each SCS. In Fig. 2, 15 kHz, 30 kHz, 60 kHz, 120 kHz, 240 kHz, 480 kHz, and 960 kHz are exemplified as an SCS for the FR4, but other SCSs may be defined. Note that the numerical values illustrated in Fig. 2 are an example, and are not limited thereto.

As illustrated in Fig. 2, the SCS and the symbol length have a reciprocal relationship. Therefore, when the SCS is n times, the symbol length is 1/n. As illustrated in Fig. 2, the symbol length becomes shorter as the SCS becomes wider.

In addition, in the FR4, a cyclic prefix (CP) having a shorter time length may be used. In addition, a DL control channel structure with low PAPR may be supported to maximize coverage and power amplification efficiency.

The FR4 as described above is assumed to have characteristics different from those of the existing FR (for example, FR1 or FR2 described above). However, at least one configuration of a frame structure, physical resources, and a cell (also referred to as a carrier, a serving cell, a component carrier (CC), or the like) in the FR4 has not been specifically studied.

Therefore, there is a possibility that communication control cannot be appropriately performed in the FR4 having characteristics different from those of the existing FR (for example, FR1 or FR2 described above). Therefore, the present inventors have studied a method of appropriately performing communication control in the FR4, and have reached the present invention.

Hereinafter, embodiments according to the present disclosure will be described in detail with reference to the drawings. Note that the following first to fifth aspects may be used alone, or at least two aspects may be combined.

Note that, in the present embodiment, the communication control in the FR4 is exemplified, but the communication control may be applied to an FR (for example, at least one of the FR1 to FR3, and the like) other than the FR4.

(First Aspect)

In the first aspect, a frame structure used in the FR4 will be described. The frame structure used in the FR4 may be the same as or different from the frame structure used in Rel. 15 NR.

< Time Unit >

In Rel. 15 NR, a time domain is indicated by a time unit $T_c$. The time unit $T_c$ may be expressed by, for example, Formula 1 described below. The time unit is also referred to as a basic time unit or the like.

$$(Formula\ 1)$$

$$T_c = 1/\Delta f_{max} \cdot N_f$$

Here, it may be $\Delta f_{max} = 480 \cdot 10^3$ Hz. In addition, it may be $N_f = 4096$.

On the other hand, the time unit $T_c$ for the FR4 may be expressed by, for example, Formula 2 described below.

$$(Formula\ 2)$$

$$T_c = 1/\Delta f_{max} \cdot N_f$$

Here, $\Delta f_{max} = x \cdot 10^3$ Hz, and it may be x > 480 (for example, 960, 1920, or the like). x may be a value based on a subcarrier spacing (SCS) (for example, maximum SCS for NR). In addition, $N_f = N$, and N may be a value based on fast Fourier transform (FFT) or discrete Fourier transform (DFT).

Note that Formula 2 is merely an example, and the time unit $T_c$ for the FR4 may be determined based on at least one of the SCS for the FR4 and the FFT (or DFT) for the FR4.

< Frame/Subframe >

In Rel. 15 NR, downlink and uplink transmission may be organized into a frame (also referred to as radio frame). A time length (duration) $T_f$ of the frame is 10 ms, and may be expressed by Formula 3 described below.

$$(Formula\ 3)$$

$$T_f = (\Delta f_{max} \cdot N_f / 100) \cdot T_c = 10ms$$

In addition, each frame may have 10 subframes. A time length (duration) $T_{sf}$ of each subframe is 1 ms, and may be expressed by Formula 4 described below.

$$(Formula\ 4)$$

$$T_{sf} = (\Delta f_{max} \cdot N_f / 1000) \cdot T_c = 1ms$$

The frame for the FR4 may be maintained at 10 ms similarly to the frame of Rel. 15 NR. For example, the duration $T_f$ of the frame for the FR4 may be calculated using Formula 3 described above, and the definitions of $T_c$, $\Delta f_{max}$, and $N_f$ in Formula 3 may follow the definitions used in Formula 2 described above.

The subframe for the FR4 may be maintained at 1 ms similarly to the subframe of Rel. 15 NR. For example, the duration $T_f$ of the subframe for the FR4 may be calculated using Formula 4 described above. In this case, the definitions of $T_c$, $\Delta f_{max}$, and $N_f$ in Formula 4 may follow Formula 2 described above. The frame for the FR4 may include 10 subframes for the FR4.

< Slot >

A slot may include a given number of consecutive symbols $N^{slot}_{symbol}$ in time domain. Here, the length of one symbol (time length, duration) has a reciprocal relationship with the SCS. As the SCS becomes larger, the length of one symbol may be shorter.

The number of symbols $N^{slot}_{symbol}$ per slot in the FR4 is a fixed value (for example, 14 symbols·n (an integer of n ≥ 1)) regardless of the SCS. In this case, the larger the SCS, the shorter the time length of the slot for NR may be. In addition, the number of slots per frame or subframe may increase as the SCS becomes larger.

For example, when the SCS is n times, the number of slots per frame or subframe may also be n times. For example, when the SCS is 120 kHz and the numbers of slots per frame and per subframe are 80 and 8, the SCS may be 480 kHz and the numbers of slots per frame and per subframe may be 320 and 32.

Alternatively, the number of symbols $N^{slot}_{symbol}$ per slot in the FR4 may be determined based on the SCS. In this case, by increasing the number of symbols $N^{slot}_{symbol}$ as the SCS becomes larger, the slot length for NR may be maintained equal between different SCSs. In addition, the number of slots per frame or subframe may be maintained equal between different SCSs.

For example, when the SCS is n times, the number of symbols $N^{slot}_{symbol}$ per slot may also be n times. For example, in a normal cyclic prefix (CP) (first CP), when an SCS is 120 kHz and $N^{slot}_{symbol} = 14$, it may be $N^{slot}_{symbol} = 56$ when the SCS is 480 kHz. In this case, in both SCSs of 120 kHz and 480 kHz, the numbers of slots per frame and subframe may be equal (for example, the number of slots per frame may be 80 and the number of slots per subframe may be 8).

Further, in an extended CP (second CP) having a time length longer than that of the normal CP, when $N^{slot}_{symbol} = 12$ in the SCS of 120 kHz, it may be $N^{slot}_{symbol} = 48$ when the SCS is 480 kHz.

< Transition Time >

UE that does not have a full-duplex communication capability in a group including one or more cells may not expect (assume) to transmit an uplink signal in a given cell in the group earlier than certain time $N_{Rx-Tx}Tc$ after the end of downlink signals received in the same or different cells in the group.

A parameter (also referred to as transition time, downlink/uplink transition time, or the like) $N_{Rx-Tx}$ used for determining the time $N_{Tx-Rx}Tc$ for switching from downlink reception to uplink transmission may be defined for each FR. For example, the transition time $N_{Rx-Tx}$ for the FR4 may be longer or shorter than that for FR1 or FR2.

In addition, UE that does not have a full-duplex communication capability in a group including one or more cells may not expect (assume) to receive a downlink signal in a given cell in the group earlier than certain time $N_{Tx-Rx}Tc$ after the end of uplink signals transmitted in the same or different cells in the group.

A parameter (also referred to as transition time, uplink/downlink transition time, or the like) $N_{Tx-Rx}$ used for determining the time $N_{Tx-Rx}Tc$ for switching from uplink transmission to downlink reception may be defined for each FR. For example, the transition time $N_{Tx-Rx}$ for the FR4 may be longer than that for FR1 or FR2.

< Resource block >

A resource block (RB) (also referred to as a physical resource block (PRB) or the like) may include a given number of consecutive subcarriers $N^{RB}_{SC}$ in frequency domain.

The number of subcarriers $N^{RB}_{SC}$ per RB in the FR4 may be a fixed value regardless of the SCS. For example, the number of subcarriers $N^{RB}_{SC}$ per RB may be 12 or k. Here, k < 12, and it may be, for example, 9, 8, 7, 6, 5, or the like. In a case where the number of subcarriers $N^{RB}_{SC}$ per RB is a fixed value, for example, when the SCS becomes n times, the bandwidth of one RB may become 1/n times.

Alternatively, the number of subcarriers $N^{RB}_{SC}$ per RB in the FR4 may be determined based on the SCS. For example, when the SCS becomes larger, the number of subcarriers $N^{RB}_{SC}$ per RB may be determined to be small. Thus, the bandwidth of one RB may be maintained equal between different SCSs.

Note that the number of resource elements (RE) per RB may be maintained similarly to that of Rel. 15 NR. For example, the number of REs per RB may be 168 (= $N^{slot}_{symb.} \cdot N^{RB}_{SC}$).

< Modulation Scheme >

The modulation scheme (also referred to as a modulation order) used in the FR4 may be the same as or different from that of Rel. 15 NR.

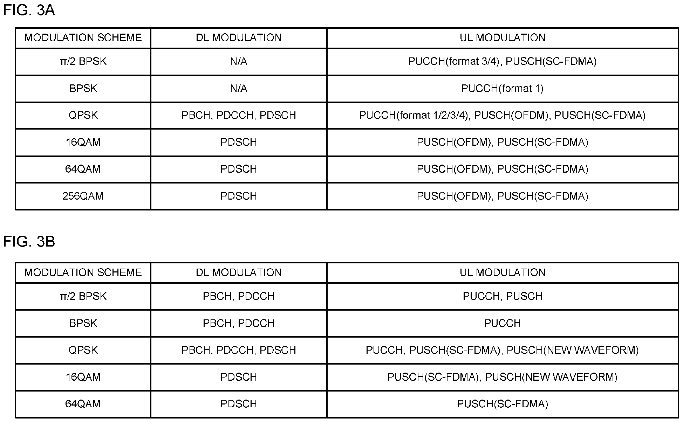

Fig. 3A is a diagram illustrating an example of a modulation scheme used in Rel. 15 NR. As illustrated in Fig. 3A, in Rel. 15 NR, $\pi/2$ binary phase shift keying (BPSK) (also referred to as $\pi/2$ shift BPSK, Pi/2 BPSK, or the like), BPSK, quarter phase shift keying (QPSK), 16 quadrature amplitude modulation (QAM), 64 QAM, and 256 QAM may be supported.

Note that the modulation order of $\pi/2$ BPSK or BPSK is 1. In addition, the modulation orders of QPSK, 16 QAM, 64 QAM, and 256 QAM may be 2, 4, 6, and 8, respectively.

As illustrated in Fig. 3A, $\pi/2$ BPSK may be used for an uplink control channel (for example, physical uplink control channel (PUCCH)) of a PUCCH format 3 or 4 and an uplink shared channel (for example, physical uplink shared channel (PUSCH)) to which single carrier frequency division multiple access (SC-FDMA) is applied. In addition, BPSK may be used for PUCCH format 1.

In addition, QPSK may be applied to at least one of a broadcast channel (for example, physical broadcast channel (PBCH)), a downlink control channel (for example, physical downlink control channel (PDCCH)), a downlink shared channel (for example, physical downlink shared channel (PDSCH)), a PUCCH in PUCCH formats 1 to 4, a PUSCH to which OFDM is applied, and a PUSCH to which SC-FDMA is applied.

In addition, 16 QAM, 64 QAM, and 256 QAM may be applied to at least one of a PUSCH to which OFDM is applied and a PUSCH to which SC-FDMA is applied.

Note that the PUSCH to which SC-FDMA is applied may be paraphrased as a PUSCH of a discrete Fourier transform spread orthogonal frequency division multiplexing (DFT-spread OFDM) waveform, a PUSCH to which transform precoding is applied, or the like.

In addition, the PUSCH to which the OFDM is applied may be paraphrased as a PUSCH of an OFDM waveform, a PUSCH to which the transform precoding is not applied, or the like.

Fig. 3B is a diagram illustrating an example of a modulation scheme used in the FR4 according to the first aspect. As illustrated in Fig. 3B, in the FR4, at least one of $\pi/2$ BPSK, BPSK, QPSK, 16 QAM, and 64 QAM is supported, and 256 QAM may not be supported.

As illustrated in Fig. 3B, in the FR4, $\pi/2$ BPSK may be applied to at least one of a PBCH, a PDCCH, a PUCCH, and a PUSCH. In addition, BPSK may be applied to at least one of a PBCH, a PDCCH, and a PUCCH. Note that PBCH may or may not be supported in the FR4.

In addition, QPSK may be applied to at least one of a PBCH, a PDCCH, a PDSCH, a PUCCH, a PUSCH to which SC-FDMA is applied, and a PUSCH to which a new waveform is applied. Note that, in the FR4, the PUSCH of the OFDM waveform may not be supported.

Here, the new waveform may be a waveform different from the DFT-spread OFDM waveform and the OFDM waveform, may, for example, be single carrier transmission in which DFT (or FFT) and inverse discrete Fourier transform (IDFT) (or inverse fast Fourier transform (IFFT)) are not applied, or the numbers of points of DFT (or FFT) and IDFT (or IFFT) are equal, or may be another waveform.

In addition, 16 QAM may be applied to at least one of a PDSCH, a PUSCH to which SC-FDMA is applied, and a PUSCH to which a new waveform is applied. In addition, 64 QAM may be applied to at least one of a PDSCH and a PUSCH to which SC-FDMA is applied.

Note that Fig. 3B is merely an example, and the modulation scheme used for each channel in the FR4 is not limited to that illustrated.

< Modulation and Coding Scheme (MCS) >

In the FR4, at least one of a modulation order $(Qm)$, a target code rate, and spectral efficiency may be associated with an index (also referred to as MCS index, $I_{MCS}$, or the like).

The UE may determine at least one of a modulation order, a target code rate, and a transport block size (TBS) of a PDSCH or PUSCH based on an MCS index indicated by a value of a certain field (for example, modulation and coding scheme field) in downlink control information used for scheduling the PDSCH or PUSCH.

Specifically, the UE may determine the modulation order and the target code rate associated with the MCS index indicated by a given field value in the DCI in a table (also referred to as an MCS table, an MCS index table, or the like) associating at least one of the modulation order $(Qm)$, the target code rate, and the spectral efficiency with the MCS index.

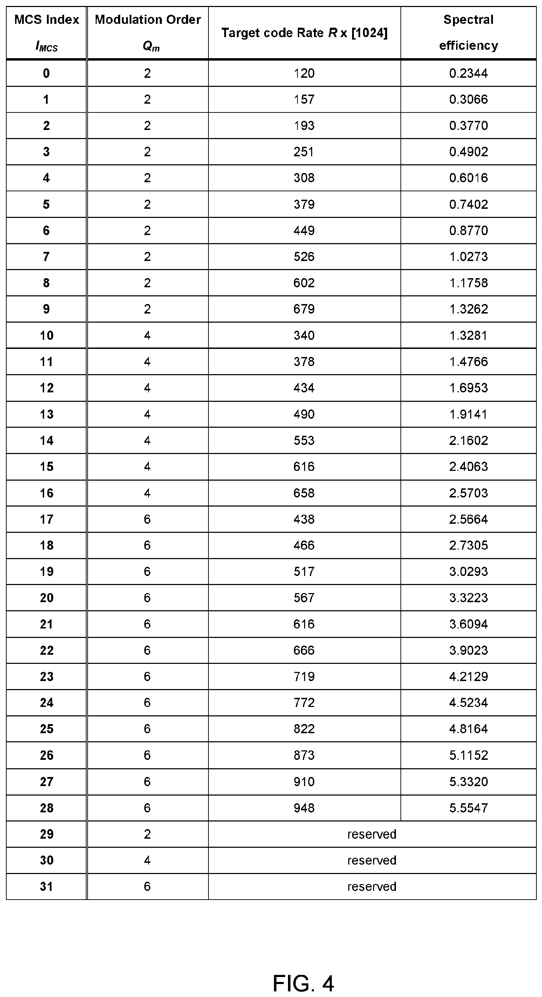

Figs. 4 to 6 are diagrams illustrating an example of an MCS index table. As illustrated in Figs. 4 to 6, the MCS index may be associated with at least one of the modulation order, the target code rate, and the spectral efficiency.

In Rel. 15 NR, a plurality of MCS index tables having different values for at least one of the modulation order, the target code rate, and the spectral efficiency associated with each MCS index is defined. For the plurality of MCS index tables, MCS index table 1 in which the maximum modulation order is 6 (for example, Fig. 4), MCS index table 2 in which the maximum modulation order is 8, and MCS index table 3 in which the target code rate associated with the same MCS index is smaller than that of MCS index table 1 may be used.

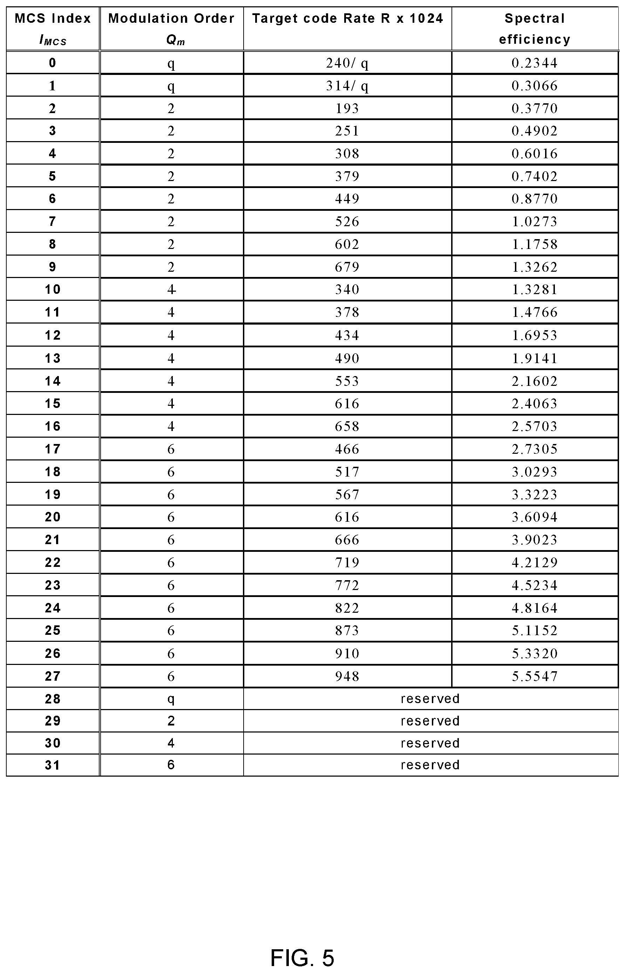

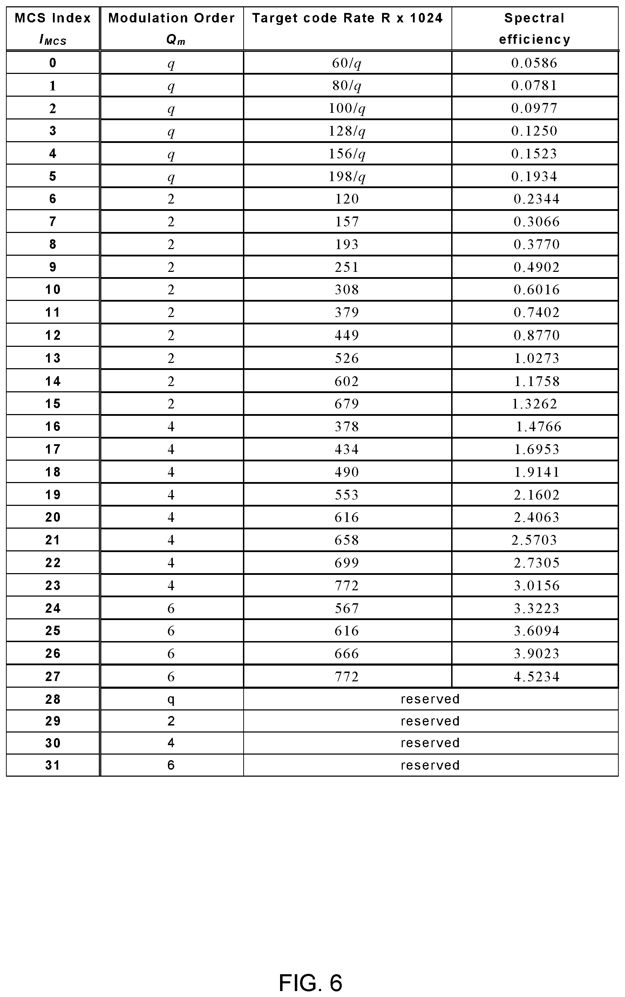

In Rel. 15 NR, first and second MCS index tables (for example, Figs. 5 and 6) and the like for a PUSCH to which transform precoding is applied are defined. Note that, in Figs. 5 and 6, when notification of a parameter (for example, radio resource control (RRC) information element (IE) "tp-pi2BPSK") indicating π/2 BPSK (also referred to as Pi/2 BPSK or the like) is given to the UE by higher layer signaling, it may be q = 1, and when notification of the parameter is not given, it may be q = 2.

<< New MCS Index Table >>

In the FR4, an MCS index table for the FR4 may be defined separately from the plurality of MCS index tables (for example, Figs. 4 to 6) defined in Rel. 15 NR. In the MCS index table for the FR4, at least one of the modulation order, the target code rate, and the spectral efficiency may be associated with the MCS index. The maximum value of the modulation order may be 6. In addition, a plurality of MCS index tables may be defined for the FR4.

The UE may determine which MCS index table to use based on explicit information by at least one of higher layer signaling and DCI. For example, information giving an instruction on use of the MCS index table of the FR4 may be given in notification to (configured in) the UE by higher layer signaling. Alternatively, the UE may be defined in the specification to use the new MCS index table in the FR4.

Alternatively, the UE may determine which MCS index table to use based on implicit information. For example, the UE may determine which MCS index table to use based on at least one of a DCI format, a set of one or more search spaces (search space set) used for monitoring the DCI, a control resource set (CORESET) associated with the search space set, a frequency range (FR), and a radio network temporary identifier (RNTI) used for cyclic redundancy check (CRC) bits scrambling (CRC scrambling) of the DCI.

<< Reuse of MCS Index Table >>

Alternatively, in the FR4, at least one of the plurality of MCS index tables (for example, Figs. 4 to 6) defined in Rel. 15 NR may be reused as an MCS index table for the FR4.

For example, when a serving cell is configured in the FR4, the first and second MCS index tables (for example, Figs. 5 and 6) for the PUSCH to which the transform precoding is applied in Rel. 15 NR may be applied not only to the PUSCH but also to the PDSCH. The waveform of the PUSCH may be a DFT-spread OFDM waveform, a CP-OFDM waveform, or a new waveform. The waveform of the PDSCH may be a CP-OFDM waveform or a new waveform. As described above, the MCS index table used for an uplink signal having a specific waveform in Rel. 15 NR described above may be applied to a downlink signal and an uplink signal having another waveform in the FR4.

In addition, when a serving cell is configured in the FR4, the UE may not expect that MCS index tables 1, 2, and 3 in Rel. 15 NR described above are configured or designated.

< DCI Format/Size >

In the FR4, at least one (DCI format/size) of the format and size of the DCI used for scheduling the PDSCH or the PUSCH may be the same as or different from the DCI format used in Rel. 15 or 16.

For example, in Rel. 15 or 16, DCI formats 1_0, 1_1, and 1_x (x is an arbitrary character string) may be used for PDSCH scheduling. In addition, DCI formats 0_0, 0_1, and 0_x (x is an arbitrary character string) may be used for PUSCH scheduling.

The DCI format/size used in the FR4 may be the same as at least one of DCI formats 1_0, 1_1, and 1_x, and DCI formats 0_0, 0_1, and 0_x, or may be a newly defined DCI format.

In addition, the DCI format/size used in the FR4 may be the same as or different from at least one of DCI formats 2_x (x = 0, 1, 2, 3) used in Rel. 15 or 16.

According to the first aspect described above, communication control in the FR4 can be appropriately performed.

(Second Aspect)

In the second aspect, one or more cells (also referred to as a carrier, a CC, a serving cell, or the like) used in the FR4 will be described.

Each cell used in the FR4 may be a cell supporting only downlink communication (DL only cell), a cell supporting downlink communication and uplink communication but restricting a part of the uplink communication (DL/UL restricting cell), or a cell supporting downlink communication and uplink communication and not restricting the uplink communication (DL/UL non-restricting cell).

< DL Only Cell >

Each cell configured in the FR4 may be a DL only cell supporting only downlink communication. Each cell configured in the FR4 may be, for example, a secondary cell (SCell).

When the FR4 cell is used as a DL only cell, the FR4 cell may be operated non-stand alone. That is, an FR4 cell and a cell in another FR (for example, at least one of FR1 to FR3) may be configured in the UE by carrier aggregation (CA) or dual connectivity (DC) between FRs.

The UE may transmit uplink control information (UCI) corresponding to a downlink signal received in the FR4 cell (DL only cell) in the cell in the other FR (for example, FR1 to FR3).

The UCI corresponding to the downlink signal received in the FR4 cell may include, for example, at least one of those described below.

- Delivery confirmation information (also referred to as hybrid automatic repeat request-acknowledgement (HARQ-ACK), acknowledgement/non-acknowledgement (ACK/NACK), A/N, or the like) for the downlink signal (for example, PDSCH)
- Channel state information (CSI) determined (measured) based on the downlink signal (for example, a synchronization signal block (SSB) or a channel state information reference signal (CSI-RS)) or a resource for the downlink signal (for example, an SSB or CSI-RS resource)

Here, the SSB is a signal block including at least one of a primary synchronization signal (PSS), a secondary synchronization signal (SSS), and a broadcast channel (physical broadcast channel (PBCH)). The SSB may be referred to as an SS/PBCH block.

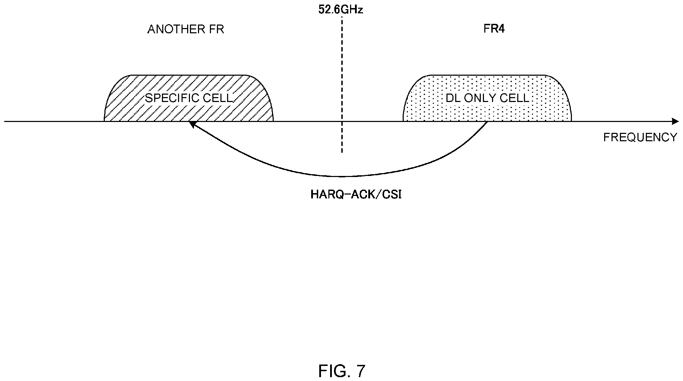

Fig. 7 is a diagram illustrating an example of UCI transmission corresponding to a downlink signal received by the FR4 cell according to the second aspect. As illustrated in Fig. 7, when the FR4 cell is a DL only cell, the FR4 cell may be operated non-stand alone by DC or CA between the FR4 cell and a cell in another FR (for example, at least one of FR1 to FR3).

Note that, in Fig. 7, one DL only cell is configured in the UE in the FR4, but a plurality of DL only cells may be configured in the UE in the FR4. Similarly, in another FR (for example, at least one day of FR1 to FR3), one or more cells may be configured in the UE.

As illustrated in Fig. 7, the UE may transmit UCI (for example, at least one of HARQ-ACK and CSI (HARQ-ACK/CSI)) corresponding to the downlink signal received in the FR4 cell in a specific cell (also referred to as a second cell or the like) in another FR. The UE may transmit the UCI using the PUCCH or the PUSCH in the specific cell in the other FR.

The specific cell in the other FR may be, for example, at least one of a primary cell (PCell), a primary secondary cell (PSCell), and a SCell transmitting a PUCCH (PUCCH SCell).

Alternatively, the specific cell in the other FR may be, for example, an arbitrary SCell.

Alternatively, the specific cell in the other FR may be an uplink dedicated cell (for example, supplementary uplink (SUL)). The SUL may be, for example, a cell provided in a frequency band lower than 2 GHz. In addition, the SUL may be an LTE cell, and DC (also referred to as E-UTRA-NR Dual Connectivity (EN-DC) or the like) may be performed between an LTE SUL and an NR FR4 cell.

The UE may determine the association (that is, a specific cell that transmits UCI) between each cell in the FR4 and the specific cell in the other FR by explicit information of at least one of higher layer signaling and DCI, or implicit information.

Note that, in the present disclosure, it is sufficient if the higher layer signaling is at least one of radio resource control (RRC) signaling, system information (for example, at least one of remaining minimum system information (RMSI), other system information (OSI), and system information block (SIB)), broadcast information (for example, physical broadcast channel (PBCH) or master information block (MIB)), medium access control (MAC) signaling, or radio link control (RLC) signaling.

The explicit information may be, for example, an index of a cell in another FR.

In addition, the implicit information may be, for example, an index of a cell for performing cross-carrier scheduling on the FR4 cell, or an index of configuration information regarding DC or CA (for example, a cell that performs DC or CA with the FR4 cell (for example, PCell, PSCell, SCell, or the like)).

For example, the UE may determine a cell in another FR that schedules (cross-carrier scheduling) the downlink signal in the FR4 cell as a cell that transmits the UCI corresponding to the downlink signal.

In addition, the UE may determine a cell determined based on a given rule (for example, PCell, PSCell, PUCCH SCell, or cell index is minimum or maximum, or the like) among cells in another FR that perform CA or DC with the FR4 cell as a cell that transmits the UCI corresponding to the downlink signal.

< DL/UL Restricting Cell >

Each cell configured in the FR4 may be a DL/UL restricting cell that supports downlink communication and uplink communication but restricts a part of the uplink communication.

For example, the DL/UL restricting cell may not support transmission of at least one (PUCCH/PRACH) of a PUCCH and a random access channel (physical random access channel (PRACH)). Note that, in the DL/UL restricting cell, transmission of the PUSCH may be supported.

When the FR4 cell is used as a DL/UL restricting cell, the FR4 cell may be operated non-stand alone. That is, the FR4 cell and a cell in another FR (for example, at least one of FR1 to FR3) may be configured in the UE by CA or DC between FRs.

The UE may transmit the UCI corresponding to at least one (downlink/uplink signal) of the downlink signal received in the FR4 cell (DL/UL restricting cell) and the uplink signal transmitted in the FR4 cell in a cell in another FR (for example, FR1 to FR3) or in the FR4 cell.

The UCI corresponding to the downlink/uplink signal may include, for example, at least one of those described below.

- HARQ-ACK with respect to the downlink signal (for example, PDSCH)
- CSI determined (measured) based on the downlink signal (for example, SSB or CSI-RS) or a resource for the downlink signal (for example, an SSB or CSI-RS resource)
- Scheduling request (SR) for the uplink signal (for example, the PUSCH)

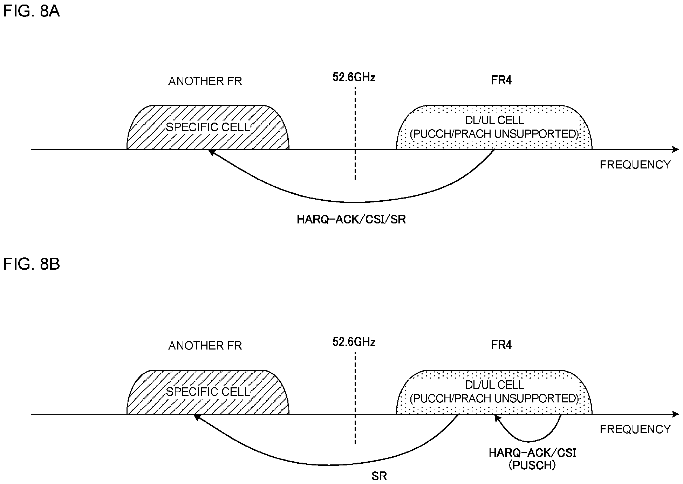

Figs. 8A and 8B are diagrams illustrating an example of UCI transmission corresponding to a downlink/uplink signal transmitted and received by an FR4 cell according to the second aspect. Figs. 8A and 8B are different from Fig. 7 in that the FR4 cell is not a DL only cell but a DL/UL restricting cell. Referring to Figs. 8A and 8B, differences from Fig. 7 will be mainly described.

In Figs. 8A and 8B, the FR4 cell supports both DL communication and UL communication, but may not support a part of the UL communication (for example, transmission of PUCCH/PRACH). In Figs. 8A and 8B, similarly to Fig. 7, the FR4 cell may be operated non-stand alone by DC or CA between the FR4 cell and a cell in another FR (for example, at least one of FR1 to FR3).

As illustrated in Fig. 8A, the UE may transmit UCI (for example, at least one of HARQ-ACK, CSI, and SR (HARQ-ACK/CSI/SR)) corresponding to the downlink/uplink signal transmitted and received in the FR4 cell in a specific cell (also referred to as a second cell or the like) in another FR. The specific cell in the other FR is as described in the case where the FR4 cell is a DL only cell (for example, Fig. 7).

Alternatively, as illustrated in Fig. 8B, the UE may transmit UCI (for example, at least one of HARQ-ACK and CSI (HARQ-ACK/CSI)) corresponding to the downlink signal received in the FR4 cell in the FR4 cell. In this case, the UE may transmit the UCI corresponding to the downlink signal using the PUSCH in the FR4 cell. In this case, the FR4 cell may be operated stand alone.

In Fig. 8B, the PUSCH used for the transmission of the UCI (for example, HARQ-ACK/CSI) in the FR4 cell may be dynamically scheduled or semi-statically configured (may be subjected to semi-persistent scheduling (SPS)). The dynamic scheduling of the PUSCH may be performed by the DCI received in a cell in another FR (may be subjected to cross-carrier scheduling).

On the other hand, as illustrated in Fig. 8B, the UE may transmit the UCI (for example, SR) corresponding to the uplink signal (for example, PUSCH) transmitted in the FR4 cell in the specific cell in the other FR. The UE may transmit the UCI using the PUCCH or the PUSCH in the specific cell in the other FR.

Note that the specific cell in the other FR is as described in the case where the FR4 cell is a DL only cell (for example, Fig. 7). The association between each cell of the FR4 and the specific cell in the other FR (that is, determination of the specific cell that transmits the UCI) is also as described in the case where the FR4 cell is a DL only cell (for example, Fig. 7).

In Figs. 8A and 8B, the FR4 cell may belong to the same timing advanced group (TAG) as a cell in another FR. Here, the TAG is a group (set) of cells according to the same timing advance command. The timing advance command is used to align a boundary of slots in order to keep uplink orthogonality, and may be referred to as a timing advance value, a timing advance (TA), or the like.

Alternatively, in Figs. 8A and 8B, the FR4 cell may not support TA. In the FR4 cell, the UE may assume (determine or expect) that TA is 0.

< DL/UL Non-Restricting Cell >

Each cell configured in the FR4 is a DL/UL non-restricting cell that supports downlink communication and uplink communication and does not restrict the uplink communication.

For example, in the DL/UL non-restricting cell, transmission of the PUCCH/PRACH may be supported. In addition, in the DL/UL non-restricting cell, transmission of the PUSCH may be supported.

When the FR4 cell is used as a DL/UL non-restricting cell, the FR4 cell may be operated stand alone in the FR4, or may be operated non-stand alone by CA or DC with another FR.

The UE may transmit the UCI corresponding to the downlink/uplink signal transmitted and received in the FR4 cell (DL/UL non-restricting cell) in the FR4 cell, or may transmit the UCI in a cell in another FR (for example, FR1 to FR3).

The UCI corresponding to the downlink/uplink signal may include, for example, at least one of those described below.

- HARQ-ACK with respect to the downlink signal (for example, PDSCH)
- CSI determined (measured) based on the downlink signal (for example, SSB or CSI-RS) or a resource for the downlink signal (for example, an SSB or CSI-RS resource)
- SR of the uplink signal (for example, a PUSCH)

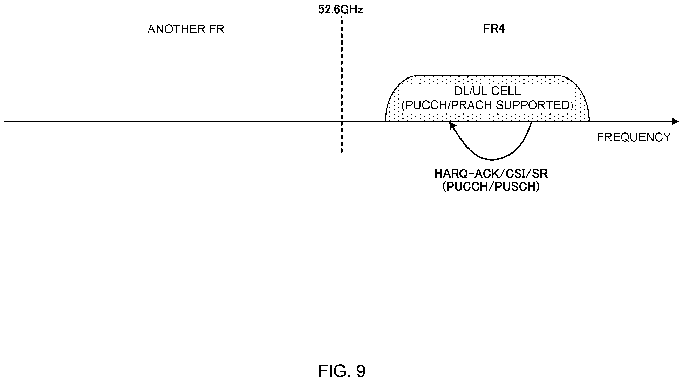

Fig. 9 is a diagram illustrating an example of UCI transmission corresponding to a downlink/uplink signal transmitted and received by an FR4 cell according to the second aspect. Fig. 9 is different from Figs. 8A and 8B in that the FR4 cell supports the PUCCH/PRACH. Referring to Fig. 9, differences from Figs. 8A and 8B will be mainly described.

In Fig. 9, the FR4 cell supports both DL communication and UL communication. In addition, the FR4 cell may support transmission of the PUCCH/PRACH. Although Fig. 9 illustrates the case of standalone of the FR4, as described in Figs. 8A and 8B, the FR4 cell may be operated non-stand alone by DC or CA between the FR4 cell and a cell in another FR (for example, at least one of FR1 to FR3).

As illustrated in Fig. 9, the UE may transmit UCI (for example, HARQ-ACK/CSI/SR) corresponding to the downlink/uplink signal transmitted and received in the FR4 cell in the FR4 cell (also referred to as a first cell or the like). In this case, the UE may transmit the UCI using the PUCCH or the PUSCH in the FR4 cell.

For example, when the PUSCH is scheduled at the timing of transmission of the UCI, the UE may transmit the UCI using the PUSCH. On the other hand, when the PUSCH is not scheduled at the timing of transmission of the UCI, the UE may transmit the UCI using the PUCCH. The timing of transmission of the UCI may be rephrased as a time unit (for example, a symbol, a slot, a sub-slot, a mini slot, or the like) for transmitting the UCI.

< Dynamic Switching >

A corresponding uplink dedicated cell (for example, the SUL) may be associated with the FR4 cell (for example, the DL only cell, DL/UL restricting cell, and DL/UL non-restricting cell).

When at least a part of the UCI can be transmitted in the FR4 cell (in the case of the FR4 cell, the DL/UL restricting cell, or the DL/UL non-restricting cell), the cell for transmission of the UCI may be dynamically switched between the FR4 cell and the SUL corresponding to the FR4 cell.

Specifically, the UE may determine, based on the DCI, a cell that transmits the UCI corresponding to the downlink/uplink signal in the FR4 cell. For example, a value of a certain field in the DCI may give an instruction on the cell (for example, FR4 cell or SUL).

For example, when the value of the given field in the DCI gives an instruction on the SUL, the UE may transmit the UCI in the SUL. On the other hand, when the value of the given field of the DCI does not give an instruction on the SUL (alternatively, when giving an instruction on the FR4 cell), the UE may transmit the UCI in the FR4 cell.

Note that the DCI may, for example, be DCI (for example, DCI format 0_0 or 0_1) used for PUSCH scheduling. In this case, the UE may transmit the UCI by using the PUSCH scheduled to the SUL or the FR4 cell by the DCI.

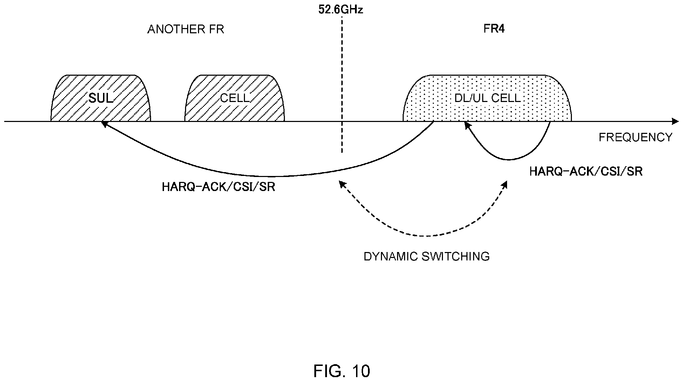

Fig. 10 is a diagram illustrating an example of dynamic switching of a cell for UCI transmission according to the second aspect. In Fig. 10, it is sufficient if the FR4 cell is a DL/UL restricting cell or a DL/UL non-restricting cell.

As illustrated in Fig. 10, in the FRs other than the FR4, the SUL corresponding to the FR4 cell may be configured in the UE. As illustrated in Fig. 10, when the SUL is configured, the FR4 cell may be operated non-stand alone by CA or DC between FRs. Note that, in Fig. 10, the SUL and another cell (for example, PCell or PSCell) are provided in the FR other than the FR4, but the other cell may not be provided.

In Fig. 10, the same numerology or different numerologies may be used between the SUL of another FR and the FR4 cell. The numerology may include the parameters described in the first aspect (for example, at least one of the SCS, the symbol length, the CP length, the number of symbols per slot, the time unit Tc, the frame, the subframe, the RB, the modulation scheme, the MCS, the DCI format/size, and the like).

It is sufficient if at least one of the PRACH, the PUSCH, the PUCCH, and a sounding reference signal (SRS) is transmitted in at least one of the FR4 cell, the SUL in another FR, and a cell in another FR.

For example, when the FR4 cell is a DL/UL restricting cell, the PRACH/PUCCH may be transmitted in a cell or SUL in another FR. In addition, when the FR4 cell is a DL/UL non-restricting cell, the PRACH/PUCCH may be transmitted in the FR4 cell, or a cell or SUL in another FR.

As described above, by dynamically switching the cell that transmits the UCI corresponding to the downlink/uplink signal in the FR4 cell, off-load of the FR4 is possible. In addition, since it is assumed that the coverage of the SUL is larger than that of the FR4 cell, it is possible to prevent the UCI from not reaching the base station due to the lack of coverage.

(Third Aspect)

In the third aspect, an operation mode (scenario) (for example, non-stand alone or stand alone) of one or more cells (also referred to as a carrier, a CC, a serving cell, or the like) used in the FR4 will be described.

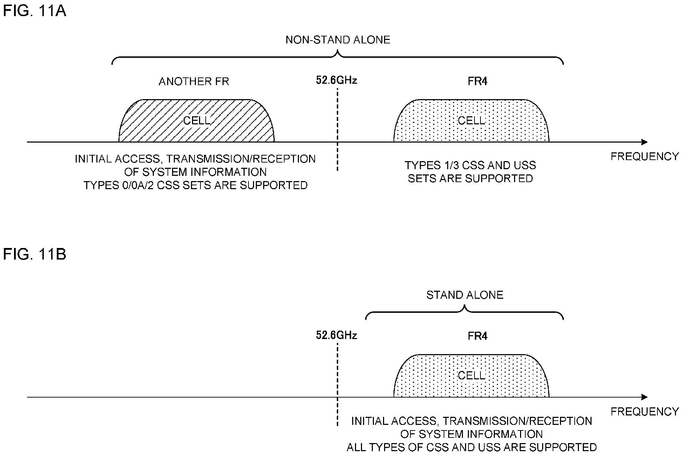

The FR4 cell may be operated non-stand alone by CA or DC with a cell in another FR (for example, FR1 to FR3), or may be operated stand alone. Figs. 11A and 11B are diagrams illustrating an example of an operation mode of an FR4 cell according to the third aspect.

< Non-Stand Alone >

In Fig. 11A, an example of non-stand alone is illustrated. In Fig. 11A, the FR4 cell may be, for example, any one of the DL only cell, the DL/UL restricting cell, and the DL/UL non-restricting cell. Note that the number of cells in the FR4 and the number of cells in another FR are not limited to those illustrated.

In Fig. 11A, the UE may perform initial access in a cell in another FR (for example, FR1 to FR3). In the initial access, the UE may detect an SSB transmitted in the cell in the other FR and receive broadcast information (for example, a master information block (MIB)) via the PBCH.

In addition, the UE may receive the system information (for example, a system information block (SIB)) based on the broadcast information in the cell in the other FR.

In addition, in the cell in the other FR, a search space set common to one or more pieces of UE (common search space (CSS) set) may be supported. As illustrated in Fig. 11A, at least one CSS set below may be supported in the cell in the other FR.

- Type 0-PDCCH CSS set
- Type OA-PDCCH CSS set
- Type 2-PDCCH CSS set

The type 0-PDCCH CSS set is used to monitor a DCI format that is CRC-scrambled with a system information-radio network temporary identifier (SI-RNTI) in a certain cell (for example, a primary cell).

The type 0-PDCCH CSS set may be configured in the UE based on information (for example, radio resource control (RRC) parameter "pdcch-ConfigSIB1") in the MIB transmitted by the PBCH.

Alternatively, the type 0-PDCCH CSS set may be configured based on information (for example, RRC parameter "searchSpaceSIB1" or searchSpaceZero") in the information regarding a cell-specific PDCCH (cell-specific PDCCH information, for example, RRC parameter "PDCCH-ConfigCommon").

Notification of the cell-specific PDCCH information may be given to the UE by system information (for example, a system information block (SIB) 1) or UE-specific RRC signaling (for example, configuration information (for example, RRC parameter "Reconfiguration-WithSync") for synchronization in an RRC reconfiguration message).

The type OA-PDCCH CSS set is used to monitor a DCI format that is CRC-scrambled with an SI-RNTI in a certain cell (for example, a primary cell). The type OA-PDCCH CSS set may be configured based on information (for example, RRC parameter "searchSpaceOtherSystemInformation") in the cell-specific PDCCH information.

The type 2-PDCCH CSS set is used to monitor a DCI format that is CRC-scrambled with a paging (P)-RNTI in a certain cell (for example, a primary cell). The type 2-PDCCH CSS set may be configured based on information (for example, RRC parameter "pagingSearchSpace") in the cell-specific PDCCH information.

On the other hand, in the FR4 cell, a CSS set and a UE-specific SS set (UE-specific search space (USS) set) may be supported. As illustrated in Fig. 11B, at least one CSS set and USS set below may be supported in the FR4 cell.

- Type 1-PDCCH CSS set
- Type 3-PDCCH CSS set

The type 1-PDCCH CSS set is used to monitor a DCI format that is CRC-scrambled with a random access (RA)-RNTI or TC-RNTI in a certain cell (for example, a primary cell). The type 1-PDCCH CSS set may be configured based on information (for example, RRC parameter "ra-SearchSpace") in the cell-specific PDCCH information.

The type 3-PDCCH CSS set is used to monitor a DCI format that is CRC-scrambled with a given RNTI (for example, slot format indicator (SFI)-RNTI, INT-RNTI, TPC-PUSCH-RNTI, TPC-PUCCH-RNTI, and TPC-SRS-RNTI). The type 3-PDCCH CSS set may be configured based on information (for example, RRC parameter "SearchSpace") in the information regarding the UE-specific PDCCH (UE-specific PDCCH information, for example, RRC parameter "PDCCH-Config"). Notification of the UE-specific PDCCH information may be given to the UE by UE-specific RRC signaling (for example, an RRC reconfiguration message).

The USS set is used to monitor a DCI format that is CRC-scrambled by a given RNTI (for example, C-RNTI or CS-RNTI). The USS set may be configured based on information (for example, RRC parameter "Search-Space") in the UE-specific PDCCH information.

< Stand Alone >

In Fig. 11B, an example of stand alone is illustrated. In Fig. 11B, the FR4 cell may be, for example, the DL/UL non-restricting cell. Note that the number of cells in the FR4 is not limited to that illustrated.

In Fig. 11B, the UE may perform the initial access and the reception of the system information in the FR4 cell. The SSB transmitted in the FR4 cell may support an SCS wider than that in another FR (for example, FR1 to FR3). The minimum bandwidth for at least one of SSB reception and initial access (SSB reception/initial access) in the FR4 cell may be wider than the minimum bandwidth for SSB reception/initial access (for example, 20 RBs) in a cell in the other FR.

In addition, in the FR4 cell, the CSS set (for example, at least one of the above type 0/0A/1/2/3 CSS sets) and the USS set may be supported.

(Fourth Aspect)

In the fourth aspect, cross-carrier scheduling is described. The cross-carrier scheduling is to perform scheduling of the PDSCH or PUSCH in the first cell by the DCI transmitted in the second cell.

The cross-carrier scheduling may be supported between the first and second cells in the FR4, or may be supported from the second cell in another FR to the first cell in the FR4.

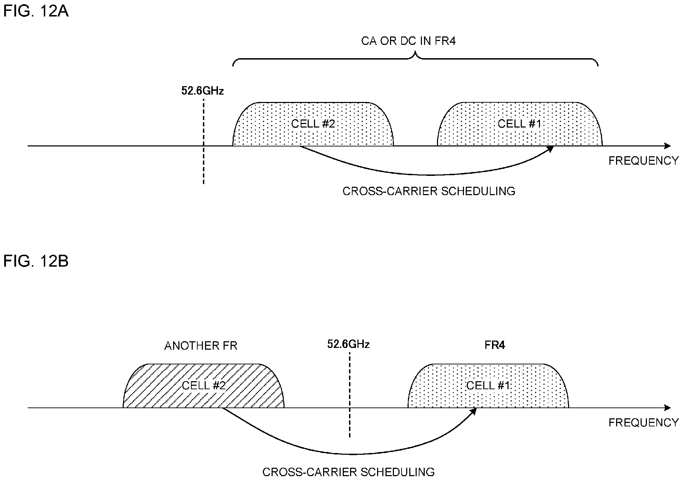

Figs. 12A and 12B are diagrams illustrating an example of cross-carrier scheduling according to the fourth aspect. Note that the number of cells in the FR4 and the number of cells in another FR are not limited to those illustrated.

As illustrated in Fig. 12A, when CA or DC is performed in the FR4, at least one of the PUSCH and the PDSCH of cell #1 may be scheduled by the DCI of cell #2. In Fig. 12A, stand alone of the FR4 may be applied as an operation mode.

On the other hand, as illustrated in Fig. 12B, when non-stand alone operation mode using CA or DC of the FR4 cell #1 and cell #2 in another FR is applied, at least one of the PUSCH and the PDSCH of the FR4 cell #1 may be scheduled by the DCI of cell #2 in another FR.

Note that Figs. 12A and 12B may be combined. Specifically, when CA or DC of a plurality of cells in the FR4 and one or more cells in other FRs is performed, the PDSCH or PUSCH of a given cell in the FR4 may be cross-carrier scheduled by another cell in the FR4, or may be cross-carrier scheduled by a cell in another FR.

(Fifth Aspect)

In the fifth aspect, extension of the FR4 will be described. The FR4 may include a plurality of sub-FRs (for example, two sub-FRs).

All sub-FRs in the FR4 may have the same (common) configuration. The configuration common to all sub-SRs may be different from those of other FRs (for example, existing FR1 or FR2 and NR Rel. 15 or 16).

At least two of all sub-FRs in the FR4 may have a different configuration. A plurality of configurations different between the sub-SRs may be different from those of other FRs (for example, existing FR1 or FR2 and NR Rel. 15 or 16).

At least one of all the sub-FRs in the FR4 may be the same as (common to) other FRs (for example, existing FR1 or FR2 and NR Rel. 15 or 16), and the rest of all the sub-FRs may have a configuration different from those of the other FRs.

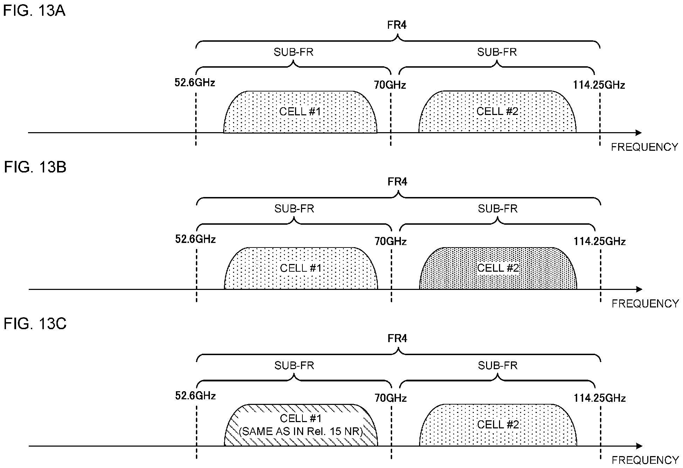

Figs. 13A to 13C are diagrams illustrating an example of a configuration of FR4 according to the fifth aspect. As illustrated in Figs. 13A to 13C, an example in which the FR4 is divided into a first sub-FR and a second sub-FR relative to a boundary based on a specific frequency (for example, 70 GHz) is illustrated, but the number and frequency ranges of the sub-FRs in the FR4 are not limited to those illustrated.

For example, in Figs. 13A to 13C, the first sub-FR may be configured between 52.6 GHz and 70 GHz, and the second sub-FR may be configured between 70 GHz and 114.25 Hz. 70 GHz, which is a boundary, may be included in either the first sub-FR or the second sub-FR.

As illustrated in Fig. 13A, the first and second sub-FRs of the FR4 may have the same (common) configuration. The same configuration may be different from those of other FRs (for example, existing FR1 or FR2 and NR Rel. 15 or 16).

As illustrated in Fig. 13B, the configuration between the first and second sub-FRs of the FR4 may be different. The configurations of the first and second sub-FRs may be different from those of other FRs (for example, existing FR1 or FR2 and NR Rel. 15 or 16).

As illustrated in Fig. 13C, the configuration of the first sub-FR of the FR4 may be common to other FRs (for example, existing FR1 or FR2 and NR Rel. 15 or 16). On the other hand, the configuration of the second sub-FR of the FR4 may be different from other FRs (for example, existing FR1 or FR2 and NR Rel. 15 or 16).

Note that the configuration of the sub-FR may include the numerology and the parameters described in the first aspect (for example, at least one of the SCS, the symbol length, the CP length, the number of symbols per slot, the time unit Tc, the frame, the subframe, the RB, the modulation scheme, the MCS, the DCI format/size, and the like).

(Radio Communication System)

Hereinafter, a configuration of a radio communication system according to one embodiment of the present disclosure will be described. In this radio communication system, communication is performed using any one of the radio communication methods according to the aspects of the present disclosure or a combination thereof.

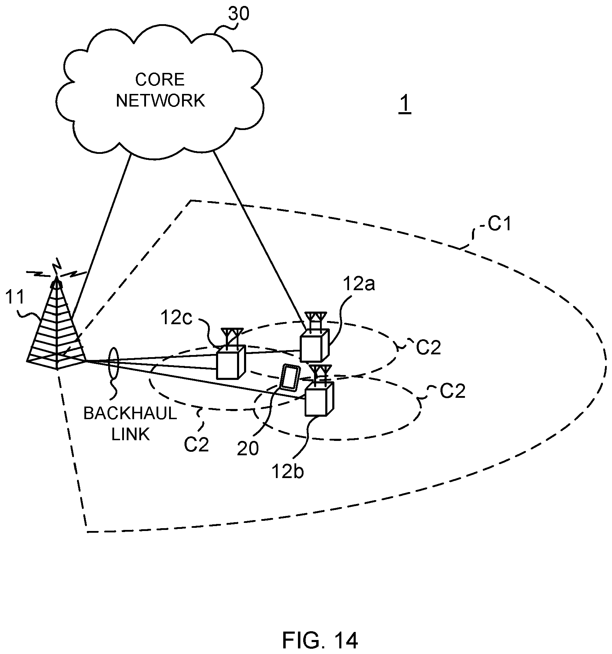

Fig. 14 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNBs) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited to these, and for example, FR1 may be a frequency range higher than FR2.

Further, the user terminal 20 may perform communication on each CC using at least one of time division duplex (TDD) or frequency division duplex (FDD).

The plurality of base stations 10 may be connected by wire (for example, an optical fiber or an X2 interface in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

A base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method and another multi-carrier transmission method) may be used as UL and DL radio access methods.

In the radio communication system 1, as a downlink channel, a physical downlink shared channel (PDSCH) shared by each user terminal 20, a physical broadcast channel (PBCH), a physical downlink control channel (PDCCH), or the like may be used.

Further, in the radio communication system 1, as an uplink channel, an uplink shared channel (physical uplink shared channel (PUSCH)) shared by each user terminal 20, an uplink control channel (physical uplink control channel (PUCCH)), a random access channel (physical random access channel (PRACH)), and the like may be used.

User data, higher layer control information, and a system information block (SIB) and the like are transmitted by the PDSCH. The PUSCH may transmit user data, higher layer control information, and the like. Further, the PBCH may transmit a master information block (MIB).

Lower layer control information may be transmitted by the PDCCH. The lower layer control information may include, for example, downlink control information (DCI) including scheduling information for at least one of the PDSCH and the PUSCH.

Note that, the DCI for scheduling the PDSCH may be referred to as DL assignment, DL DCI, and the like, and the DCI for scheduling the PUSCH may be referred to as UL grant, UL DCI, and the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor a CORESET associated with a given search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), or the like may be transmitted on the PUCCH. A random access preamble for establishing connection with a cell may be transmitted by the PRACH.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be at least one of, for example, a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), and the like. Note that the SS, the SSB, or the like may also be referred to as a reference signal.

Further, in the radio communication system 1, a measurement reference signal (sounding reference signal (SRS)), a demodulation reference signal (DMRS), and the like may be transmitted as an uplink reference signal (UL-RS). Note that the DMRS may be referred to as a "user terminal-specific reference signal (UE-specific Reference Signal)".

(Base station)

Fig. 15 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example will primarily illustrate functional blocks that pertain to characteristic parts of the present embodiment, it may be assumed that the base station 10 has other functional blocks that are necessary for radio communication as well. A part of processing of each section described below may be omitted.

The control section 110 controls the entire base station 10. The control section 110 can include a controller, a control circuit, and the like that are described based on common recognition in the technical field related to the present disclosure.

The control section 110 may control signal generation, scheduling (for example, resource allocation, mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, state management of the base station 10, management of a radio resource, and the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be formed as an integrated transmitting/receiving section, or may include a transmitting section and a receiving section. The transmitting section may be configured by the transmission processing section 1211 and the RF section 122. The receiving section may be configured by the reception processing section 1212, the RF section 122, and the measurement section 123.

The transmission/reception antenna 130 can include an antenna that is described based on common recognition in the technical field related to the present disclosure, for example, an array antenna or the like.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), or the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, to transmit a signal in the radio frequency range via the transmission/reception antenna 130.

Meanwhile, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 120 (measurement section 123) may perform measurement related to the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), signal to interference plus noise ratio (SINR), or signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmission/reception antenna 130, and the transmission line interface 140.

Note that the transmitting/receiving section 120 may perform at least one of transmission of a downlink signal and reception of an uplink signal in a first cell in a first frequency range (for example, FR4). The transmitting/receiving section 120 may perform at least one of transmission of a downlink signal and reception of an uplink signal in a second cell in a second frequency range (for example, FR1 to FR3).

The control section 110 may control reception of uplink control information corresponding to at least one of the downlink signal and the uplink signal in at least one of the first cell and the second cell in the second frequency range (for example, FR1 to FR3) lower than the first frequency range (second aspect).

The control section 110 may control switching between the first cell and the second cell used for transmission of the uplink control information based on the downlink control information (second aspect).

At least one of a frame, a subframe, a slot, a resource block, a modulation scheme, and a table associating an index with at least one of a modulation order and a coding rate used in the first cell in the first frequency range (for example, FR4) may be defined to be the same as or different from that of the second cell in the second frequency range (for example, FR1 to FR3) (first aspect).

The control section 110 may control at least one of initial access and reception of system information in the first cell in the first frequency range (for example, FR4) or the second cell in the second frequency range (for example, FR1 to FR3) (third aspect).

The control section 110 may control at least one of transmission of the downlink signal and reception of the uplink signal in the first cell in the first frequency range scheduled by downlink control information received in a third cell in the first frequency range (for example, FR4) or the second cell in the second frequency range (for example, FR1 to FR3) (fourth aspect).

The first frequency range (for example, FR4) may include a plurality of sub-frequency ranges (fifth aspect).

(User Terminal)

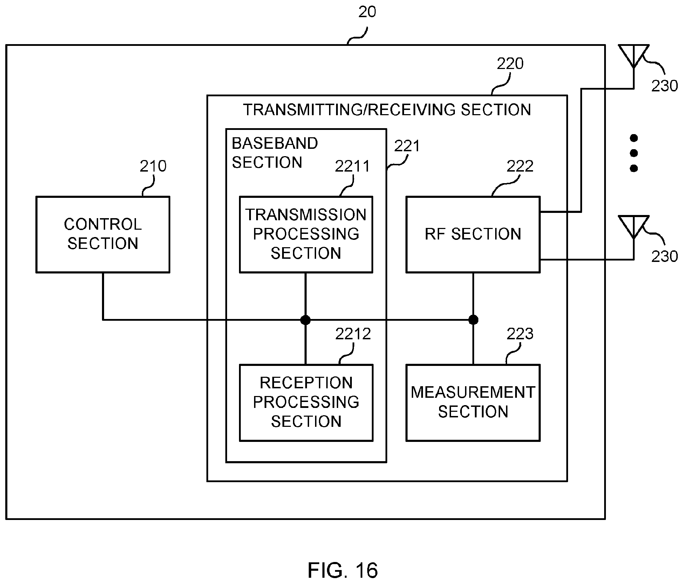

Fig. 16 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section.

The transmitting section may be configured by the transmission processing section 2211 and the RF section 222. The receiving section may be configured by the reception processing section 2212, the RF section 222, and the measurement section 223.

The transmission/reception antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a given channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure the received power (for example, RSRP), the received quality (for example, RSRQ, SINR, SNR, etc.), the signal strength (for example, RSSI), propagation path information (for example, CSI), and so on. The measurement result may be output to the control section 210.

Note that the transmitting section and the receiving section of the user terminal 20 in the present disclosure may include at least one of the transmitting/receiving section 220 or the transmission/reception antenna 230.

Note that the transmitting/receiving section 220 may perform at least one of reception of a downlink signal and transmission of an uplink signal in a first cell in a first frequency range (for example, FR4). The transmitting/receiving section 220 may perform at least one of reception of a downlink signal and transmission of an uplink signal in a second cell in a second frequency range (for example, FR1 to FR3).

The control section 210 may control transmission of uplink control information corresponding to at least one of the downlink signal and the uplink signal in at least one of the first cell and the second cell in the second frequency range (for example, FR1 to FR3) lower than the first frequency range (second aspect).

The control section 210 may control switching between the first cell and the second cell used for transmission of the uplink control information based on the downlink control information (second aspect).

At least one of a frame, a subframe, a slot, a resource block, a modulation scheme, and a table associating an index with at least one of a modulation order and a coding rate used in the first cell in the first frequency range (for example, FR4) may be defined to be the same as or different from that of the second cell in the second frequency range (for example, FR1 to FR3) (first aspect).

The control section 210 may control at least one of initial access and reception of system information in the first cell in the first frequency range (for example, FR4) or the second cell in the second frequency range (for example, FR1 to FR3) (third aspect).

The control section 210 may control at least one of reception of the downlink signal and transmission of the uplink signal in the first cell in the first frequency range scheduled by downlink control information received in a third cell in the first frequency range (for example, FR4) or the second cell in the second frequency range (for example, FR1 to FR3) (fourth aspect).

The first frequency range (for example, FR4) may include a plurality of sub-frequency ranges (fifth aspect).

(Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, radio, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (configuration unit) that causes transmission to function may be referred to as a transmitting unit, a transmitter, and the like. In any case, as described above, the implementation method is not particularly limited.

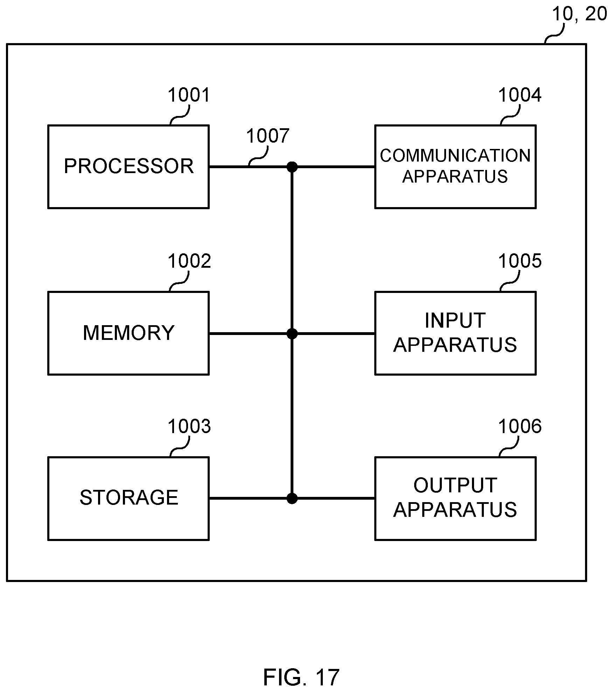

For example, the base station, the user terminal, and the like according to one embodiment of the present disclosure may function as a computer that executes the processing of the radio communication method of the present disclosure. Fig. 17 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is illustrated, a plurality of processors may be provided.

Further, the processing may be executed by one processor, or the processing may be executed in sequence or using other different methods by two or more processors. Note that the processor 1001 may be implemented with one or more chips.

Each function of the base station 10 and the user terminal 20 is implemented by, for example, controlling communication via the communication apparatus 1004 by causing given software (program) to be read on hardware such as the processor 1001 and the memory 1002 and thereby causing the processor 1001 to perform operation, or by controlling at least one of reading and writing of data in the memory 1002 and the storage 1003.

The processor 1001 may control the whole computer by, for example, running an operating system. The processor 1001 may be configured with a central processing unit (CPU), which includes interfaces with peripheral equipment, control apparatus, computing apparatus, a register and the like. For example, at least a part of the above-described control section 110(210), transmitting/receiving section 120(220), and the like may be implemented by the processor 1001.

Furthermore, the processor 1001 reads programs (program codes), software modules, data, and so on from at least one of the storage 1003 or the communication apparatus 1004 into the memory 1002, and executes various processing according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be implemented by, for example, at least one of a read only memory (ROM), an erasable programmable ROM (EPROM), an electrically EPROM (EEPROM), a random access memory (RAM), and/or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmission/reception device) for performing inter-computer communication through at least one of a wired network or a radio network, and may be referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating a transmitting section 120a (220a) and a receiving section 120b (220b) from each other.

The input apparatus 1005 is an input device for receiving input from the outside (for example, a keyboard, a mouse, a microphone, a switch, a button, a sensor, and so on). The output apparatus 1006 is an output device that performs output to the outside (for example, a display, a speaker, a light emitting diode (LED) lamp, and the like). Note that the input apparatus 1005 and the output apparatus 1006 may be provided in an integrated structure (for example, a touch panel).

Further, these apparatuses such as the processor 1001 and the memory 1002 are connected to each other by the bus 1007 to communicate information. The bus 1007 may be formed with a single bus, or may be formed with different buses for respective connections between the apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

(Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or a plurality of durations (frames) in the time domain. Each of the one or plurality of durations (frames) included in the radio frame may be referred to as a subframe. Further, the subframe may include one or more slots in the time domain. A subframe may be a fixed time length (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in the time domain, and the like.

The slot may include one or a plurality of symbols (for example, orthogonal frequency division multiplexing (OFDM) symbol and single carrier frequency division multiple access (SC-FDMA) symbol) in the time domain. Further, the slot may be a time unit based on the numerology.

A slot may include a plurality of mini slots. Each mini slot may include one or a plurality of symbols in the time domain. Further, the mini slot may be referred to as a sub-slot. Each mini slot may include fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as a PDSCH (PUSCH) mapping type B.

A radio frame, a subframe, a slot, a mini slot, and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as a TTI, a plurality of consecutive subframes may be referred to as a TTI, or one slot or one mini slot may be referred to as a TTI. That is, at least one of a subframe and a TTI may be a subframe (1 ms) in the existing LTE, may be a shorter period than 1 ms (for example, one to thirteen symbols), or may be a longer period of time than 1 ms. Note that a unit to represent a TTI may be referred to as a slot, a mini slot, or the like, instead of a subframe.

Here, for example, the TTI refers to a minimum time unit of scheduling in the radio communication. For example, in the LTE system, a base station performs scheduling to allocate radio resources (a frequency bandwidth and transmission power that can be used in each user terminal and the like) to each user terminal in TTI units. Note that the definition of the TTI is not limited thereto.

The TTI may be the transmission time unit of channel-encoded data packets (transport blocks), code blocks, or codewords, or may be the unit of processing in scheduling, link adaptation, or the like. Note that when TTI is given, a time interval (for example, the number of symbols) in which the transport blocks, the code blocks, the codewords, and the like are actually mapped may be shorter than TTI.

Note that in a case where one slot or one mini slot is referred to as a TTI, one or more TTIs (that is, one or more slots or one or more mini slots) may be the minimum time unit of scheduling. Further, the number of slots (the number of mini slots) constituting the minimum time unit of the scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that the long TTI (for example, the usual TTI, subframe, or the like) may be replaced with a TTI having a time length exceeding 1 ms, and the short TTI (for example, the shortened TTI or the like) may be replaced with a TTI having a TTI length less than the TTI length of the long TTI and not less than 1 ms.

A resource block (RB) is a resource allocation unit in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on numerology.

Further, the RB may include one or a plurality of symbols in the time domain, and may be one slot, one mini slot, one subframe, or one TTI in length. One TTI, one subframe, and the like each may include one or a plurality of resource blocks.

Note that one or a plurality of RBs may be referred to as a physical resource block (PRB), a sub-carrier group (SCG), a resource element group (REG), a PRB pair, an RB pair, and the like.

Further, the resource block may include one or a plurality of resource elements (REs). For example, one RE may be a radio resource area of one subcarrier and one symbol.

A bandwidth part (BWP) (which may be referred to as a partial bandwidth or the like) may represent a subset of consecutive common resource blocks (RBs) for given numerology in a given carrier. Here, the common RB may be specified by the index of the RB based on a common reference point of the carrier. The PRB may be defined in a given BWP and be numbered within the BWP.

The BWP may include a BWP for UL (UL BWP) and a BWP for DL (DL BWP). For the UE, one or a plurality of BWPs may be configured within one carrier.

At least one of the configured BWPs may be active, and the UE may not assume to transmit or receive a given signal/channel outside the active BWP. Note that "cell", "carrier", and the like in the present disclosure may be replaced with "BWP".

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Further, the information, parameters, and the like described in the present disclosure may be represented by using absolute values, may be represented by using relative values with respect to given values, or may be represented by using other corresponding information. For example, a radio resource may be specified by a given index.

The names used for parameters and the like in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols, and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals, and so on may be input and output via a plurality of network nodes.

The information, signals, and the like that are input and/or output may be stored in a specific location (for example, in a memory), or may be managed with a management table. The information, signal, and the like to be input and output can be overwritten, updated, or appended. The output information, signal, and the like may be deleted. The information, signals, and the like that are input may be transmitted to other apparatuses.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of MAC signaling may be performed using, for example, a MAC control element (MAC CE).

Further, notification of given information (for example, notification of "being X") is not limited to explicit notification but may be performed implicitly (for example, by not performing notification of the given information or by performing notification of another piece of information).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Further, the software, instruction, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. A base station may be referred to as a term such as a macro cell, a small cell, a femto cell, a pico cell, and the like.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station and a base station subsystem that perform a communication service in this coverage.

In the present disclosure, the terms such as mobile station (MS)", "user terminal", "user equipment (UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or by some other appropriate terms.

At least one of the base station or the mobile station may be referred to as a transmission apparatus, a reception apparatus, a radio communication apparatus, or the like. Note that at least one of the base station and the mobile station may be a device mounted on a moving object, a moving object itself, and the like. The moving object may be a transportation (for example, a car, an airplane and the like), an unmanned moving object (for example, a drone, an autonomous car, and the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with the base station. In this case, the base station 10 may be configured to have the above-described functions of the user terminal 20

In the present disclosure, an operation performed by a base station may be performed by an upper node thereof in some cases. In a network including one or a plurality of network nodes including the base station, it is clear that various operations performed to communicate with terminals may be performed by the base station, one or more network nodes other than the base station (for example, mobility management entity (MME), serving-gateway (S-GW), and the like are conceivable, but there is no limitation), or a combination thereof.

Each aspect/embodiment described in the present disclosure may be used alone, used in combination, or switched in association with execution. Further, the processing procedures, sequences, flowcharts, and the like of each aspect/embodiment that have been described in the present disclosure may be re-ordered as long as inconsistencies do not arise. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, or the like.

Further, "determining" may be regarded as "determining" of receiving (for example, receiving information), transmitting (for example, transmitting information), inputting, outputting, accessing (for example, accessing data in a memory), and the like.

Further, "determining" may be regarded as "determining" of resolving, selecting, choosing, establishing, comparing, and the like. In other words, "determining" may be regarded as "determining" of a given operation.

Furthermore, "determining" may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other". Note that the description may mean that "A and B are different from C". Terms such as "leave", "coupled", or the like may also be interpreted in the same manner as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although invention according to the present disclosure has been described above in detail, it is obvious to those skilled in the art that the invention according to the present disclosure is by no means limited to the embodiments described in the present disclosure. The invention according to the present disclosure can be embodied with various corrections and in various modified aspects, without departing from the scope of the invention defined based on the description of claims. Thus, the description of the present disclosure is for the purpose of explaining examples and does not bring any limiting meaning to the invention according to the present disclosure.

## Claims

1. A terminal (20) comprising:

   a transmitting/receiving section (220) configured to perform at least one of reception of a downlink signal and transmission of an uplink signal in a first cell in a first frequency range higher than 52.6 GHz where the number of symbols per slot is a fixed value regardless of a subcarrier spacing, SCS; and
   a control section (210) configured to control transmission of uplink control information, UCI, corresponding to at least one of the downlink signal and the uplink signal in the first cell.

2. The terminal (20) according to claim 1, wherein the control section (210) is configured to control the transmission of the UCI corresponding to at least one of the downlink signal and the uplink signal by applying the SCS greater than 240kHz.

3. The terminal (20) according to claim 1, wherein a transmission of a physical uplink control channel, PUCCH, and physical random access channel, PRACH, is supported in the first cell.

4. The terminal (20) according to claim 1, wherein a minimum bandwidth for a synchronization signal block, SSB, transmitted in the first cell is wider than a minimum bandwidth for a SSB transmitted in a second cell in a second frequency range lower than the first frequency range.

5. A radio communication method for a terminal (20) comprising:

   performing at least one of reception of a downlink signal and transmission of an uplink signal in a first cell in a first frequency range higher than 52.6 GHz where the number of symbols per slot is a fixed value regardless of a subcarrier spacing, SCS;
   controlling transmission of uplink control information, UCI, corresponding to at least one of the downlink signal and the uplink signal in the first cell.

6. A base station (10) comprising:

   a transmitting/receiving section (120) configured to perform at least one of transmission of a downlink signal and reception of an uplink signal in a cell in a first frequency range higher than 52.6 GHz where the number of symbols per slot is a fixed value regardless of a subcarrier spacing, SCS; and

a control section (110) configured to control to reception of uplink control information, UCI, corresponding to at least one of the downlink signal and the uplink signal in the cell.

7. A system (1) comprising a terminal (20) according to any one of claims 1 to 4 and a base station (10) according to claim 6.

**Patentansprüche**

1. Endgerät (20), umfassend:

einen Sende-/Empfangsabschnitt (220), der konfiguriert ist, um zumindest eines auszuführen von Empfangen eines Downlink-Signals und/oder Senden eines Uplink-Signals in einer ersten Zelle in einem ersten Frequenzbereich, der höher als 52,6 GHz ist, wobei die Anzahl der Symbole pro Slot unabhängig von einem Subträgerabstand, SCS, ein fester Wert ist; und einen Steuerabschnitt (210), der konfiguriert ist, um das Senden von Uplink-Steuerinformationen, UCI, zu steuern, die mindestens einem des Downlink-Signals und des Uplink-Signals in der ersten Zelle entsprechen.

2. Endgerät (20) nach Anspruch 1, wobei der Steuerabschnitt (210) konfiguriert ist, um das Senden der UCI entsprechend mindestens einem des Downlink-Signals und des Uplink-Signals zu steuern, indem die SCS größer als 240 kHz angewendet wird.

3. Endgerät (20) nach Anspruch 1, wobei eine Sendung eines physikalischen Uplink-Steuerkanals, PUCCH, und eines physikalischen Zufallszugriffskanals, PRACH, in der ersten Zelle unterstützt wird.

4. Endgerät (20) nach Anspruch 1, wobei eine Mindestbandbreite für einen Synchronisationssignalblock, SSB, der in der ersten Zelle gesendet wird, breiter ist als eine Mindestbandbreite für einen SSB, der in einer zweiten Zelle in einem zweiten Frequenzbereich gesendet wird, der niedriger ist als der erste Frequenzbereich.

5. Funkkommunikationverfahren für ein Endgerät (20), umfassend:

Durchführen mindestens eines von Empfangen eines Downlink-Signals und Senden eines Uplink-Signals in einer ersten Zelle in einem ersten Frequenzbereich, der höher als 52,6 GHz ist, wobei die Anzahl der Symbole pro Slot unabhängig von einem Subträgerabstand, SCS, ein fester Wert ist;

Steuern der Übertragung von Uplink-Steuerinformationen, UCI, die mindestens einem des Downlink-Signals und des Uplink-Signals in der ersten Zelle entsprechen.

6. Basisstation (10), umfassend:

einen Sende-/Empfangsabschnitt (120), der konfiguriert ist, um zumindest eines auszuführen von Senden eines Downlink-Signals und/oder Empfangen eines Uplink-Signals in einer Zelle in einem ersten Frequenzbereich, der höher als 52,6 GHz ist, wobei die Anzahl der Symbole pro Slot unabhängig von einem Subträgerabstand, SCS, ein fester Wert ist; und einen Steuerabschnitt (110), der konfiguriert ist, um den Empfang von Uplink-Steuerinformationen, UCI, zu steuern, die mindestens einem der Signale aus dem Downlink und dem Uplink in der Zelle entsprechen.

7. System (1), umfassend ein Endgerät (20) nach einem der Ansprüche 1 bis 4 und eine Basisstation (10) nach Anspruch 6.

**Revendications**

1. Terminal (20) comprenant :

une unité de transmission/réception (220) configurée pour effectuer au moins une étape parmi une réception d'un signal de liaison descendante et une transmission d'un signal de liaison montante dans une première cellule dans une première plage de fréquences supérieure à 52,6 GHz où le nombre de symboles par emplacement est une valeur fixe indépendamment d'un espacement de sous-porteuse, SCS ; et une section de commande (210) configurée pour commander une transmission d'informations de commande de liaison montante, UCI, correspondant à au moins un signal parmi le signal de liaison descendante et le signal de liaison montante dans la première cellule.

2. Terminal (20) selon la revendication 1, dans lequel la section de commande (210) est configurée pour commander la transmission de l'UCI correspondant à au moins un signal parmi le signal de liaison descendante et le signal de liaison montante en appliquant le SCS supérieur à 240 kHz.

**3.** Terminal (20) selon la revendication 1, dans lequel une transmission d'un canal physique de commande de liaison montante, PUCCH, et d'un canal physique d'accès aléatoire, PRACH, est supportée dans la première cellule.

**4.** Terminal (20) selon la revendication 1, dans lequel une bande passante minimale pour un bloc de signaux de synchronisation, SSB, transmis dans la première cellule est plus large qu'une bande passante minimale pour un SSB transmis dans une seconde cellule dans une seconde plage de fréquences inférieure à la première plage de fréquences.

**5.** Procédé de radiocommunication pour un terminal (20) comprenant :

le fait d'effectuer au moins une étape parmi une réception d'un signal de liaison descendante et une transmission d'un signal de liaison montante dans une première cellule dans une première plage de fréquences supérieure à 52,6 GHz où le nombre de symboles par emplacement est une valeur fixe indépendamment d'un espacement de sous-porteuses, SCS ;
une commande d'une transmission d'informations de commande de liaison montante, UCI, correspondant à au moins un signal parmi le signal de liaison descendante et le signal de liaison montante dans la première cellule.

**6.** Station de base (10) comprenant :

une section de transmission/réception (120) configurée pour effectuer au moins une étape parmi une transmission d'un signal de liaison descendante et une réception d'un signal de liaison montante dans une cellule dans une première plage de fréquences supérieure à 52,6 GHz où le nombre de symboles par emplacement est une valeur fixe indépendamment d'un espacement de sous-porteuses, SCS ; et
une section de commande (110) configurée pour commander une réception d'informations de commande de liaison montante, UCI, correspondant à au moins un signal parmi le signal de liaison descendante et le signal de liaison montante dans la cellule.

**7.** Système (1) comprenant un terminal (20) selon l'une quelconque des revendications 1 à 4 et une station de base (10) selon la revendication 6.

FR1{15,30,60}kHz SCS
5-100 MHz BW

FR2{60,120,(240)}kHz SCS
50-400 MHz BW

FRx above 52.6GHz

0.41GHz

7.125GHz

10GHz

24.25GHz

52.6GHz

1GHz

100GHz

FIG. 1

| SUBCARRIER SPACING | 15kHz | 30kHz | 60kHz | 120kHz | 240kHz | 480kHz | 960kHz |
|---|---|---|---|---|---|---|---|
| SYMBOL LENGTH | 66.6 $\mu$ s | 33.3 $\mu$ s | 16.65 $\mu$ s | 8.325 $\mu$ s | 4.1625 $\mu$ s | 2.0812 $\mu$ s | 1.0406 $\mu$ s |

FIG. 2

FIG. 3A

| MODULATION SCHEME | DL MODULATION | UL MODULATION |
|---|---|---|
| π/2 BPSK | N/A | PUCCH(format 3/4), PUSCH(SC-FDMA) |
| BPSK | N/A | PUCCH(format 1) |
| QPSK | PBCH, PDCCH, PDSCH | PUCCH(format 1/2/3/4), PUSCH(OFDM), PUSCH(SC-FDMA) |
| 16QAM | PDSCH | PUSCH(OFDM), PUSCH(SC-FDMA) |
| 64QAM | PDSCH | PUSCH(OFDM), PUSCH(SC-FDMA) |
| 256QAM | PDSCH | PUSCH(OFDM), PUSCH(SC-FDMA) |

FIG. 3B

| MODULATION SCHEME | DL MODULATION | UL MODULATION |
|---|---|---|
| π/2 BPSK | PBCH, PDCCH | PUCCH, PUSCH |
| BPSK | PBCH, PDCCH | PUCCH |
| QPSK | PBCH, PDCCH, PDSCH | PUCCH, PUSCH(SC-FDMA), PUSCH(NEW WAVEFORM) |
| 16QAM | PDSCH | PUSCH(SC-FDMA), PUSCH(NEW WAVEFORM) |
| 64QAM | PDSCH | PUSCH(SC-FDMA) |

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

FIG. 4

| MCS Index $I_{MCS}$ | Modulation Order $Q_m$ | Target code Rate R x 1024 | Spectral efficiency |
|---|---|---|---|
| 0 | q | 240/ q | 0.2344 |
| 1 | q | 314/ q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

FIG. 5

| MCS Index $I_{MCS}$ | Modulation Order $Q_m$ | Target code Rate R x 1024 | Spectral efficiency |
|---|---|---|---|
| 0 | $q$ | $60/q$ | 0.0586 |
| 1 | $q$ | $80/q$ | 0.0781 |
| 2 | $q$ | $100/q$ | 0.0977 |
| 3 | $q$ | $128/q$ | 0.1250 |
| 4 | $q$ | $156/q$ | 0.1523 |
| 5 | $q$ | $198/q$ | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | reserved | |
| 29 | 2 | reserved | |
| 30 | 4 | reserved | |
| 31 | 6 | reserved | |

FIG. 6

52.6GHz

ANOTHER FR

FR4

SPECIFIC CELL

DL ONLY CELL

FREQUENCY

HARQ-ACK/CSI

FIG. 7

FIG. 8A

ANOTHER FR          52.6GHz          FR4

SPECIFIC CELL

DL/UL CELL
(PUCCH/PRACH UNSUPPORTED)

FREQUENCY

HARQ-ACK/CSI/SR

FIG. 8B

ANOTHER FR          52.6GHz          FR4

SPECIFIC CELL

DL/UL CELL
(PUCCH/PRACH UNSUPPORTED)

FREQUENCY

HARQ-ACK/CSI
(PUSCH)

SR

52.6GHz

ANOTHER FR

FR4

DL/UL CELL
(PUCCH/PRACH SUPPORTED)

FREQUENCY

HARQ-ACK/CSI/SR
(PUCCH/PUSCH)

FIG. 9

FIG. 10

EP 3 993 531 B1

FIG. 11A

NON-STAND ALONE

ANOTHER FR    52.6GHz    FR4

CELL    CELL

FREQUENCY

INITIAL ACCESS, TRANSMISSION/RECEPTION
OF SYSTEM INFORMATION
TYPES 0/0A/2 CSS SETS ARE SUPPORTED

TYPES 1/3 CSS AND USS
SETS ARE SUPPORTED

FIG. 11B

STAND ALONE

52.6GHz    FR4

CELL

FREQUENCY

INITIAL ACCESS, TRANSMISSION/RECEPTION
OF SYSTEM INFORMATION
ALL TYPES OF CSS AND USS ARE SUPPORTED

FIG. 12A

CA OR DC IN FR4

52.6GHz

CELL #2

CELL #1

FREQUENCY

CROSS-CARRIER SCHEDULING

FIG. 12B

ANOTHER FR

52.6GHz

FR4

CELL #2

CELL #1

FREQUENCY

CROSS-CARRIER SCHEDULING

FIG. 13A

FIG. 13B

FIG. 13C

FIG. 14

FIG. 15

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017205133 A1

- US 2012230268 A1